# EUROPÄISCHE PATENTSCHRIFT

(11) **EP 1 714 734 B1**
(45) Veröffentlichungstag und Bekanntmachung des Hinweises auf die Patenterteilung: **12.03.2008**
(21) Anmeldenummer: 05008640.4
(22) Anmeldetag: 20.04.2005
(51) Int. Cl.: B23Q 11/00

(54) **Staubabsaugeinrichtung zur lösbaren Anbringung an einem Werkzeuggerät, mit schiebenden Ansaugbereich**
Removable dust suction device for tool, with sliding intake area
Dispositif démontable d'aspiration de poussière pour outil, avec système d'admission coulissant

(43) Veröffentlichungstag der Anmeldung: 25.10.2006
(73) Patentinhaber: Metabowerke GmbH, 72622 Nürtingen (DE)
(72) Erfinder: Kukla, Michael, 72669 Unterensingen (DE)
(74) Vertreter: Friz, Oliver

(56) Entgegenhaltungen:
- EP-A- 0 191 509
- US-A1- 2002 141 836

## Beschreibung

Die Erfindung betrifft eine Staubabsaugeinrichtung zur lösbaren Anbringung an einem motorischen Handwerkzeuggerät gemäß Oberbegriff des Anspruchs 1.

Derartige Staubabsaugeinrichtungen sind beispielsweise bekannt aus DE 101 15 116 A1 und US 2002/0141836 A1.

EP-A-0 191 509 zeigt eine ähnliche jedoch nicht gattungsgemäße Staubabsaugeinrichtung bei welcher der Faltenbalg ganz außerhalb des Gehäuses angeordnet ist.

Eine gattungsgemäße Staubabsaugeinrichtung könnte beispielsweise eine Anschlussmöglichkeit für eine externe Saugeinrichtung, beispielsweise einen an sich üblichen Staubsauger, aufweisen, oder sie kann eine integrierte Gebläseeinrichtung und eine Staubsammeleinrichtung umfassen, so dass der Saugluftstrom durch die Staubsammeleinrichtung hindurch zu der Gebläseeinrichtung gesogen und von dort nach außerhalb geblasen wird.

Der vorliegenden Erfindung liegt die Aufgabe zugrunde, eine Staubabsaugeinrichtung der eingangs genannten Art zu schaffen, bei der die flexible Ausbildung der Staubführungseinrichtung in anderer Weise realisiert ist, als dies bislang vorgeschlagen wurde, wobei hierdurch die Bedienung und insbesondere die Wartung der Einrichtung vereinfacht werden soll.

Diese Aufgabe wird durch eine Staubabsaugeinrichtung mit den Merkmalen des Anspruchs 1 gelöst.

Es hat sich gezeigt, dass durch die erfindungsgemäße Anordnung des Faltenbalgs der Faltenbalg derart formstabilisiert werden kann, dass er selbsttragend genutzt werden kann, also nicht mehr in einem rohrförmigen teleskopierenden Abschnitt angeordnet werden muss. Er kann freitragend zwischen dem Ansaugbereich der Staubführungseinrichtung und dem Gehäusekörper der Staubabsaugeinrichtung vorgesehen sein, was zahlreiche Vorteile mit sich bringt. Zum einen bedeutet dies eine Einsparung des genannten rohrförmigen Abschnitts und damit auch eine Gewichtsreduzierung. Es bietet aber auch den wesentlichen Vorteil einer freien Einsichtnahme auf den Faltenbalg. Es kann im Betrieb nicht ausgeschlossen werden, dass es im Zuge der Absaugung von scharfkantigem Bohrklein zu Beschädigungen des Faltenbalgs kommt, die seither oft längere Zeit unbemerkt blieben. Dies führt aber zu einer Herabsetzung der Saugleistung und zu einem unkontrollierten Eindringen von Bohrstaub und Schmutz in die betreffenden Komponenten, deren Leichtläufigkeit und Funktionsfähigkeit dadurch in Mitleidenschaft gezogen werden kann. Wenn der Faltenbalg hingegen durch die erfindungsgemäße Ausbildung freitragend eingesetzt wird, so lässt sich eine solche etwaige Beschädigung erkennen und reparieren.

Im Hinblick auf die vorstehend erläuterten Umstände erweist es sich auch als vorteilhaft, wenn der Faltenbalg innerhalb des Gehäusekörpers von parallel zu seiner Längserstreckung erstreckten Stegen, Rippen oder Stangen gestützt wird. Dies verleiht dem Faltbalg auch im ausgefahrenen Zustand eine formstabilisierende Wirkung.

Diese parallel erstreckten Stege, Rippen oder Stangen können vorteilhafterweise einstückig mit dem Gehäusekörper ausgebildet sein. Sie können insbesondere einstückig mit Gehäusehalbschalen des Gehäusekörpers ausgebildet sein und sich im wesentlichen senkrecht zu einer gedachten Ebene der Gehäusehalbschalen erstrecken.

Die parallel zu dem Faltenbalg vorgesehene und den Ansaugbereich der Staubführungseinrichtung gegenüber dem Gehäusekörper haltende und insbesondere auch zwangsführende Anordnung kann teleskopierbar ausgebildet sein, also durch ineinander einfahrbare, insbesondere rohr- oder profilförmige Abschnitte gebildet sein, obschon dies nicht zwingend erforderlich ist.

Es erweist sich dann auch als vorteilhaft, dass die den Ansaugbereich haltende Anordnung in Richtung auf eine Werkzeugansetzstelle vorgespannt ist. Die Vorspannung sollte dabei derart sein, dass sie die entgegengesetzte Zugspannung, welche eine gegebenenfalls vorgesehene Zugfeder innerhalb des Faltenbalgs ausübt, deutlich überwindet.

Um die hierbei auftretenden Momente möglichst gering zu halten, erweist es sich als vorteilhaft, wenn der Abstand zwischen der den Ansaugbereich haltenden Anordnung und dem Faltenbalg geringer als 50 mm, insbesondere geringer als 35 mm ist.

Es erweist sich weiter als vorteilhaft, wenn die den Ansaugbereich haltende Anordnung wenigstens einen gegenüber dem Gehäusekörper ausfahrbaren Abschnitt umfasst, in dessen Innerem eine Druckfeder vorgesehen ist. Dieser Abschnitt ist dann vorzugsweise weitgehend in den Gehäusekörper einfahrbar, und die Staubabsaugeinrichtung umfasst vorteilhafterweise ein Mittel zum Fixieren der den Ansaugbereich haltenden Anordnung in eingefahrener Position, um den hierfür erforderlichen Platzbedarf möglichst gering zu halten, wenn die Staubabsaugeinrichtung nicht benötigt wird.

Nach einem weiteren Erfindungsgedanken ist der oder ein gegenüber dem Gehäusekörper ausfahrbarer Abschnitt einstückig mit dem Ansaugbereich der Staubführungseinrichtung, welcher gegen eine zu bearbeitende Oberfläche anlegbar ist, ausgebildet.

Es erweist sich dabei auch als vorteilhaft, wenn der Ansaugbereich einen insbesondere einstückig angeformten Stutzen für den Anschluss des Faltenbalgs aufweist. Es hat sich als zweckmäßig erwiesen, wenn dieser Stutzen wenigstens 3 cm, insbesondere wenigstens 5 cm in Bewegungsrichtung erstreckt ist, wodurch einerseits eine Reduzierung der Momente und andererseits eine Schonung des Faltenbalgs erreicht werden kann, da die Impulsbeaufschlagung infolge einer Richtungsumlegung von körnigem Bohrklein auf den Faltenbalg hierdurch reduziert werden kann.

Weitere Merkmale, Einzelheiten und Vorteile der Erfindung ergeben sich aus den beigefügten Patentansprüchen und aus der zeichnerischen Darstellung und nachfolgenden Beschreibung von Ausführungsformen der erfindungsgemäßen Staubabsaugeinrichtung. In der Zeichnung zeigt:
- Figur 1: eine Schnittansicht einer erfindungsgemäßen Staubabsaugeinrichtung;
- Figur 2: eine Schnittansicht der Staubabsaugeinrichtung nach Figur 1 mit Schnittebene B-B;
- Figur 3: eine teilweise Schnittansicht durch eine Filteraufnahmekammer mit Schnittebene C-C in Figur 2;
- Figur 4: eine perspektivische und teilweise aufgerissene Ansicht eines Filters der Staubabsaugeinrichtung nach Figur 1 und
- Figur 5: eine teilweise Schnittansicht der Staubabsaugeinrichtung nach Figur 1.

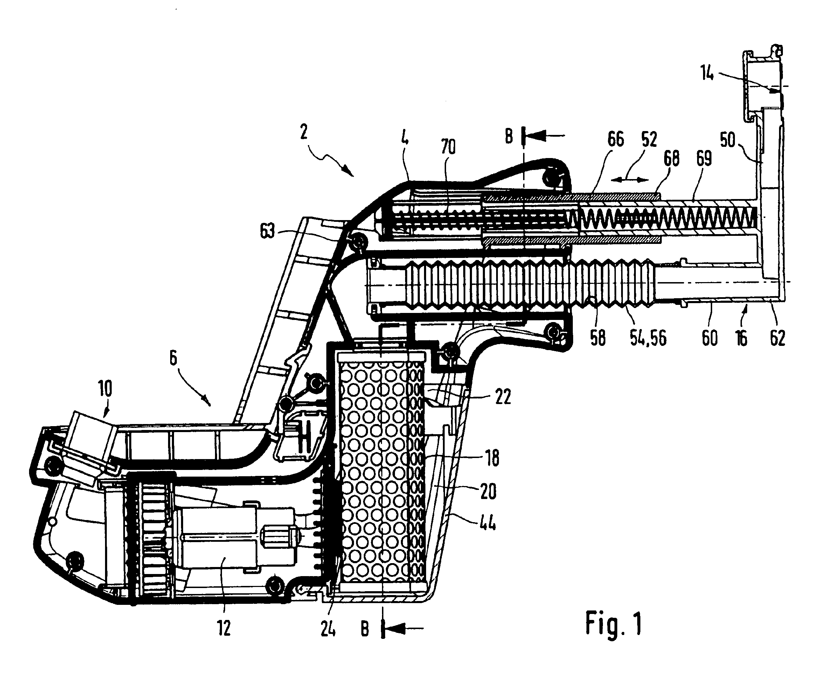

Die Figuren 1 bis 3 zeigen eine Staubabsaugeinrichtung 2, die zur lösbaren Anbringung an einem motorischen Handwerkzeuggerät, etwa eine Bohrmaschine oder ein Bohrhammer, konzipiert ist. Die Staubabsaugeinrichtung 2 umfasst einen Gehäusekörper 4, der einen Ankopplungsbereich 6 mit Befestigungsmitteln 8 zum lösbaren Anbringen der Staubabsaugeinrichtung an einem nicht dargestellten Handwerkzeuggerät umfasst. Beim Ankoppeln findet auch eine elektrische Kopplung zwischen dem Handwerkzeuggerät und der Staubabsaugeinrichtung über eine elektrische Kontaktierungseinrichtung 10 statt.

Die Staubabsaugeinrichtung 2 weist eine elektromotorisch angetriebene Gebläseeinrichtung 12 auf, die einen Saugluftstrom erzeugt, der im Bereich einer Werkzeugansetzstelle 14 entstehenden Bohrstaub über eine teleskopierbare Staubführungseinrichtung 16 zu einer Staubsammeleinrichtung 18 transportiert. Der Saugluftstrom passiert die Staubsammeleinrichtung und wird über die Gebläseeinrichtung 12 nach außen befördert.

Die Staubsammeleinrichtung 18 ist vorliegend von einem noch näher zu beschreibenden kartuschenartigen Filter 20, der in einer Filteraufnahmekammer 22 des Gehäusekörpers 4 aufgenommen ist, gebildet ist.

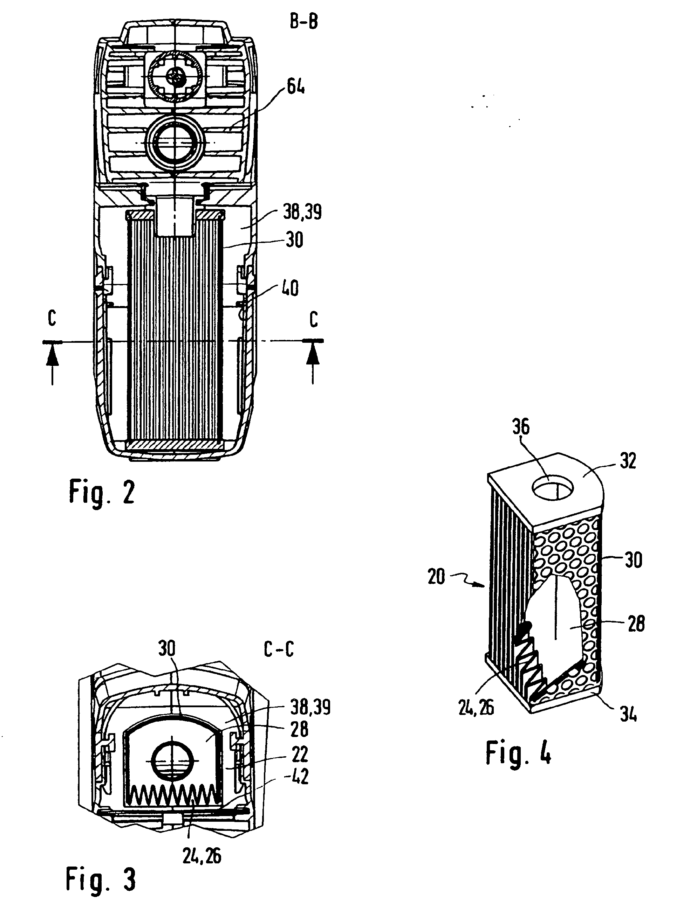

Der Filter 20 umfasst ein auf einer Seite des Filters leporelloförmig gefaltetes Filtermaterial 24 (Figuren 4). Das Filtermaterial 24 bildet Wandungen 26, die einen allseitig umschlossenen Filterinnenraum 28 begrenzen. In diesen Filterinnenraum 28 mündet die Staubführungseinrichtung 16. Der Saugluftstrom wird also in den Filterinnenraum 28 geleitet, so dass sich darin mitgeführter Bohrstaub und Schmutz innerhalb des Filters 20 abscheidet und die Saugluft den Filter 20 bzw. dessen Filtermaterial 24 nach radial außen durchströmt.

Radial außerhalb des Filtermaterials 24 ist auf drei Seiten des Filters 20 eine Ummantelung 30 aus einem vorzugsweise starren oder halbstarren Material vorgesehen, welche das Filtermaterial 24 und die hierdurch gebildeten penetrierbaren Wandungen 26 des Filters 20 stabilisiert. An den freien Enden der Ummantelung 30 ist jeweils ein Abschlussstück 32 bzw. 34 vorgesehen. Das Abschlussstück 32 weist eine Öffnung 36 auf, durch welche ein Stutzen 38 der Staubführungseinrichtung 16 in den Filterinnenraum 28 mündet. Das Filtermaterial 24, die Ummantelung 30 und die beiden Abschlussstücke 32, 34 bilden den Filter 20, der als solcher in die Filteraufnahmekammer 22 einsetzbar bzw. aus dieser entnehmbar ist.

Der Filter 20 ist in der Filteraufnahmekammer 22 nun so angeordnet, dass außerhalb der penetrierbaren Wandungen 26 des Filters 20 und vorzugsweise auch außerhalb der Ummantelung 30 des Filters 20 ein durchströmbarer Raum 38, der einen freien Strömungsquerschnitt 39 bildet, gegeben ist. Es ist also ein Abstand zwischen den penetrierbaren Wandungen des Filters und Wandungen 40 des Gehäusekörpers 4, welche die Filteraufnahmekammer 22 begrenzen oder bilden, vorgesehen. Dieser Abstand soll einen freien Strömungsquerschnitt für den durch den Filter 20 hindurchtretenden Saugluftstrom bilden, so dass der Filter 20 möglichst allseits umströmbar in der Filteraufnahmekammer 22 vorgesehen ist und insbesondere nicht die Gefahr besteht, dass sich Filtermaterial gegen Ansaugöffnungen 42, die zu der Gebläseeinrichtung 12 führen, anlegt und den Strömungswiderstand erhöht und die Saugleistung damit verringert.

Der Filter 20 ist nach dem Öffnen einer Gehäuseklappe 44 aus der Filteraufnahmekammer 22 entnehmbar. Er kann durch Abnehmen des Abschlussstücks 32 gereinigt werden, indem der darin enthaltene Schmutz oder Staub entnommen wird. Dabei kann auch das Filtermaterial 24 entnommen und gegen ein neues ausgetauscht werden.

Die Staubführungseinrichtung 16 umfasst einen Ansaugbereich 50, der gegenüber dem Gehäusekörper 4 in der Bearbeitungsrichtung 52 bewegbar ist, also von dem Gehäusekörper 4 weg und auf den Gehäusekörper zu verstellbar ist. Der Ansaugbereich 50 ist über einen Faltenbalg 54 mit dem Gehäusekörper 4 verbunden, wobei der Faltenbalg 54 einen flexiblen Abschnitt 56 der Staubführungseinrichtung 16 bildet.

Der Faltenbalg 54 ist nicht außen am Gehäusekörper 4 befestigt, sondern er erstreckt sich in das Innere des Gehäusekörpers 4 hinein. Er ist soweit innerhalb des Gehäusekörpers 4 befestigt, dass er sich mit wenigstens 50 % seiner Länge bei maximal ausgefahrenem Ansaugbereich 50 (Hubhöhe ca. 12 cm) innerhalb des Gehäusekörpers befindet. Hierdurch wird der Faltenbalg 54 insgesamt stabilisiert, so dass er außerhalb des Gehäusekörpers 4 freitragend ist, ohne einer Stützung zu bedürfen.

Innerhalb des Faltenbalgs 54 kann zusätzlich eine lediglich angedeutete Zugfeder 58 vorgesehen werden, die den Faltenbalg 54 in Längenrichtung zu kontrahieren sucht, also dahingehend, dass der Faltenbalg 54 in Richtung des Gehäusekörpers 4 eingefahren wird. Dies ist bei dem beschriebenen Ausführungsbeispiel aber nicht erforderlich.

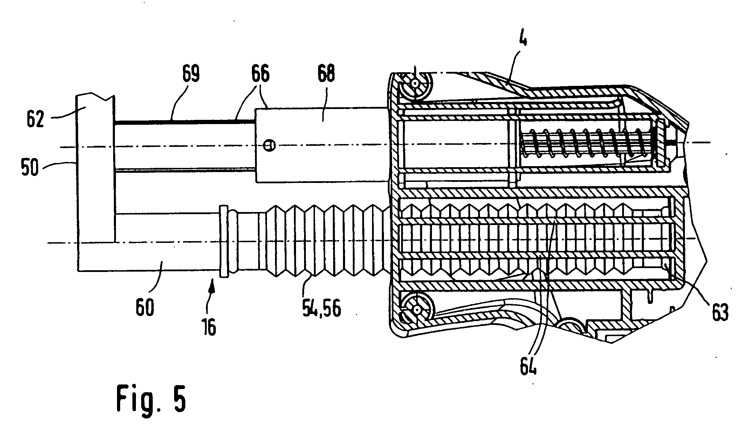

Wie aus Figur 1 ersichtlich ist, ist der Faltenbalg 54 nicht von einem stabilisierenden Rohr umgeben, sondern er ist freitragend zwischen einem Anschlussstutzen 60 des den Ansaugbereich 50 bildenden Bauteils 62 und einem Montagemittel 63 weit innerhalb des Gehäusekörpers 4 vorgesehen. Innerhalb des Gehäusekörpers 4 wird der Faltenbalg 54 durch aus Figur 5 ersichtliche in Längsrichtung verlaufende Stützrippen 64 gestützt; er ist jedoch auch in diesem Bereich nicht von einem unmittelbar anliegenden Rohr umgeben, sondern bei Öffnen des Gehäusekörpers 4 gut zugänglich.

Das den Ansaugbereich 50 der Staubführungseinrichtung 16 bildende Bauteil 62 ist über eine Anordnung 66, die im Wesentlichen parallel zur Längserstreckung des Faltenbalgs 54 vorgesehen ist, an dem Gehäusekörper 4 gehalten. Die Anordnung 66 umfasst miteinander teleskopierende rohrförmige Abschnitte 68, 69, wobei der Abschnitt 69 einstückig mit dem Bauteil 62 ausgebildet ist. Innerhalb der rohrförmigen Abschnitte 68, 69 ist eine Druckfeder 70 vorgesehen, welche die rohrförmigen Abschnitte 68, 69 und den Ansaugbereich 50 in Richtung auf das zu bearbeitende Werkstück vorspannt. Die Vorspannung ist dabei größer als die Zugspannung der Feder 58 innerhalb des Faltenbalgs 54.

## Patentansprüche

1. Staubabsaugeinrichtung (2) zur lösbaren Anbringung an einem motorischen Handwerkzeuggerät, mit einem einen Ankopplungsbereich (6) an das Handwerkzeuggerät aufweisenden Gehäusekörper (4), mit einer Staubführungseinrichtung (16), um Staub in einem Saugluftstrom von einer Werkzeugansetzstelle (14) zu einer Staubsammeleinrichtung (18) zu führen, wobei die Staubführungseinrichtung (16) einen gegenüber dem Gehäusekörper (4) in Bearbeitungsrichtung (52) bewegbaren Ansaugbereich (50) umfasst, der über einen dieser Bewegung folgenden Faltenbalg (54) mit dem Gehäusekörper (4) verbunden ist, wobei der Faltenbalg (54) sich derart in das Innere des Gehäusekörpers (4) hineinerstreckt und dort befestigt ist, dass bei maximal vom Gehäusekörper (4) ausgefahrenem Ansaugbereich (50) der Faltenbalg (54) mit wenigstens 50 % seiner Länge innerhalb des Gehäusekörpers (4) angeordnet ist und innerhalb des Gehäusekörpers (4) gestützt ist, **dadurch gekennzeichnet, dass** der Faltenbalg (54) bei Erstreckung außerhalb des Gehäusekörpers (4) freiliegt und zwischen Ansaugbereich (50) und Gehäusekörper (4) freitragend, also nicht von einem stabilisierenden Rohr umgeben ist und dass außerhalb des Faltenbalgs (54) und parallel neben dem Faltenbalg (54) eine den Ansaugbereich (50) der Staubführungseinrichtung (16) gegenüber dem Gehäusekörper (4) haltende Anordnung (66) vorgesehen ist, die in Richtung auf eine Werkzeugansetzstelle (14) vorgespannt ist.

2. Staubabsaugeinrichtung nach Anspruch 1, **gekennzeichnet durch** eine integrierte Gebläseeinrichtung (12), wobei der Saugluftstrom **durch** die Staubsammeleinrichtung (18) hindurch zu der Gebläseeinrichtung (12) gesogen wird.

3. Staubabsaugeinrichtung nach Anspruch 1 oder 2, **dadurch gekennzeichnet, dass** der Faltenbalg (54) in seinem lnneren eine Zugfeder (58) umfasst, die den Faltenbalg (54) in Längenrichtung zu kontrahieren sucht.

4. Staubabsaugeinrichtung nach einem der vorstehenden Ansprüche, **dadurch gekennzeichnet, dass** der Faltenbalg (54) innerhalb des Gehäusekörpers von parallel erstreckten Stegen (64), Rippen oder Stangen gestützt wird.

5. Staubabsaugeinrichtung nach Anspruch 4, **dadurch gekennzeichnet, dass** die parallel erstreckten Stege (64), Rippen oder Stangen einstückig mit dem Gehäusekörper (4) ausgebildet sind.

6. Staubabsaugeinrichtung nach einem der vorstehenden Ansprüche, **dadurch gekennzeichnet, dass** die den Ansaugbereich (50) haltende Anordnung (66) teleskopierbar ist.

7. Staubabsaugeinrichtung nach einem der vorstehenden Ansprüche, **dadurch gekennzeichnet, dass** die den Ansaugbereich (50) haltende Anordnung (66) wenigstens einen gegenüber dem Gehäusekörper (4) ausfahrbaren Abschnitt (68, 69) umfasst, in dessen Innerem eine Druckfeder (70) vorgesehen ist.

8. Staubabsaugeinrichtung nach einem der vorstehenden Ansprüche, **dadurch gekennzeichnet, dass** ein gegenüber dem Gehäusekörper (4) ausfahrbarer Abschnitt (69) einstückig mit dem Ansaugbereich (50) ausgebildet ist.

9. Staubabsaugeinrichtung nach einem der vorstehenden Ansprüche, **dadurch gekennzeichnet, dass** der Abstand zwischen der den Ansaugbereich (50) haltenden Anordnung (66) und dem Faltenbalg (54) geringer als 35 mm ist.

10. Staubabsaugeinrichtung nach einem der vorstehenden Ansprüche, **dadurch gekennzeichnet, dass** der Ansaugbereich (50) einen Stutzen (60) für den Anschluss des Faltenbalgs (54) aufweist, der wenigstens 3 cm in Bewegungsrichtung erstreckt ist.

## Claims

1. Dust suction device (2) for detachable application to a hand-held power tool, comprising a housing (4) with a coupling region (6) for coupling to the hand-held power tool, and a dust guiding device (16) for guiding dust in a vacuum flow from a tool placement position (14) to a dust collection device (18), the dust guiding device (16) comprising a suction region (50) movable relative to the housing (4) in the direction of use (52), which region is connected to the housing (4) by a bellows (54) which follows this movement, the bellows (54) extending into the inside of the housing (4) and being fixed there in such a way that when the suction region (50) is drawn out of the housing (4) as far as possible, the bellows (54) is arranged with at least 50% of its length inside the housing (4) and is supported inside said housing (4), **characterised in that** the bellows (54), when extended outside the housing body (4), is uncovered, and is self-supporting, i.e. not surrounded by a stabilising tube, between suction region (50) and housing (4), and **in that** outside the bellows (54) and parallel alongside the bellows (54) an arrangement (66) is provided, which holds the suction region (50) of the dust guiding device (16) in place relative to the housing (4) and is pre-tensioned in the direction of a tool placement position (14).

2. Dust suction device according to claim 1, **characterised by** an integrated fan (12), the vacuum flow being sucked through the dust collection device (18), through to the fan (12).

3. Dust suction device according to either claim 1 or claim 2, **characterised in that** the bellows (54) comprises in its interior a tension spring (58) which attempts to contract the bellows (54) in its longitudinal direction.

4. Dust suction device according to any one of the preceding claims, **characterised in that** the bellows (54) is supported inside the housing by bars (64), ribs, or rods extending in parallel.

5. Dust suction device according to claim 4, **characterised in that** the bars (64), ribs, or rods which extend in parallel are formed so as to be integral with the housing (4).

6. Dust suction device according to any one of the preceding claims, **characterised in that** the arrangement (66) holding the suction region (50) is telescopic.

7. Dust suction device according to any one of the preceding claims, **characterised in that** the arrangement (66) holding the suction region (50) comprises at least one portion (68, 69) which can extend from the housing (4) and in the interior of which a compression spring (70) is provided.

8. Dust suction device according to any one of the preceding claims, **characterised in that** a portion (69) which can extend from the housing (4) is formed integrally with the suction region (50).

9. Dust suction device according to any one of the preceding claims, **characterised in that** the distance between the arrangement (66) which holds the suction region (50) and the bellows (54) is less than 35 mm.

10. Dust suction device according to any one of the preceding claims, **characterised in that** the suction region (50) has a connecting piece (60) for attaching the bellows (54), which socket extends at least 3 cm in the direction of movement.

## Revendications

1. Dispositif d'aspiration de poussière (2) pour un placement amovible sur un appareil outil à main à moteur, comprenant un corps de carter (4) présentant une zone d'accouplement (6) à l'appareil outil à main, un dispositif de guidage de poussière (16), afin de guider la poussière dans un flux d'air aspirant depuis un point de placement d'outil (14) à un dispositif collecteur de poussière (18), le dispositif de guidage de poussière (16) comprenant une zone d'aspiration (50) déplaçable par rapport au corps de carter (4) dans le sens de traitement (52), laquelle est reliée par un soufflet (54) qui suit ce mouvement au corps de carter (4), le soufflet (54) s'étendant à l'intérieur du corps de carter (4) et étant fixé à cet endroit de telle sorte que, avec une zone d'aspiration (50) sorti au maximum du corps de carter, le soufflet (54) est disposé avec au moins 50 % de sa longueur à l'intérieur du corps de carter (4) et est soutenu à l'intérieur du corps de carter (4), **caractérisé en ce que** le soufflet (54) est libre en cas d'extension à l'extérieur du corps de carter (4) et est autoporteur entre la zone d'aspiration (50) et le corps de carter (4), donc n'est pas entouré par un tuyau stabilisateur et **en ce qu'**il est prévu à l'extérieur du soufflet (54) et en parallèle à côté du soufflet (54) un dispositif (66) maintenant la zone d'aspiration (50) du dispositif de guidage de poussière (16) par rapport au corps de carter (4) qui est pré-tendu en direction d'un point de placement d'outil (14).

2. Dispositif d'aspiration de poussière selon la revendication 1, **caractérisé par** un système de soufflerie (12) intégré, le flux d'air aspirant étant soufflé à travers le dispositif collecteur de poussière (18) vers le système de soufflerie (12).

3. Dispositif d'aspiration de poussière selon la revendication 1 ou 2, **caractérisé en ce que** le soufflet (54) comprend dans son espace intérieur un ressort de traction (58), qui cherche à contracter le soufflet (54) dans le sens de la longueur.

4. Dispositif d'aspiration de poussière selon l'une quelconque des revendications précédentes, **caractérisé en ce que** le soufflet (54) est soutenu à l'intérieur du corps de carter par des entretoises (64), des nervures ou des barres étirées parallèlement.

5. Dispositif d'aspiration de poussière selon la revendication 4, **caractérisé en ce que** les entretoises (64), nervures ou barres étirées parallèlement sont réalisées d'une seule pièce avec le corps de carter (4).

6. Dispositif d'aspiration de poussière selon l'une quelconque des revendications précédentes, **caractérisé en ce que** le dispositif (66) maintenant la zone d'aspiration (50) est télescopique.

7. Dispositif d'aspiration de poussière selon l'une quelconque des revendications précédentes, **caractérisé en ce que** le dispositif (66) maintenant la zone d'aspiration (50) comporte au moins une partie (68, 69) pouvant sortir par rapport au corps de carter (4), à l'intérieur de laquelle est prévu un ressort de pression (70).

8. Dispositif d'aspiration de poussière selon l'une quelconque des revendications précédentes, **caractérisé en ce qu'**une partie (69) pouvant sortir par rapport au corps de carter (4) est réalisé d'une seule pièce avec la zone d'aspiration (50).

9. Dispositif d'aspiration de poussière selon l'une quelconque des revendications précédentes, **caractérisé en ce que** la distance entre l'agencement (66) maintenant la zone d'aspiration (50) et le soufflet (54) est inférieure à 35 mm.

10. Dispositif d'aspiration de poussière selon l'une quelconque des revendications précédentes, **caractérisé en ce que** la zone d'aspiration (50) présente une tubulure (60) pour le raccordement du soufflet (54) qui est étendue au moins 3 cm dans le sens de déplacement.
